Europäisches Patentamt

European Patent Office

Office européen des brevets

(11) Numéro de publication: **0 035 476**
**A2**

## (12) DEMANDE DE BREVET EUROPEEN

(21) Numéro de dépôt: **81810073.7**

(51) Int. Cl.³: **C 03 C 13/00, C 04 B 25/00**

(22) Date de dépôt: **03.03.81**

(30) Priorité: **05.03.80 CH 1724/80**

(71) Demandeur: **BATTELLE MEMORIAL INSTITUTE, 7 route de Drize, CH-1227 Carouge/Genève (CH)**

(43) Date de publication de la demande: **09.09.81 Bulletin 81/36**

(72) Inventeur: **Trojer, Félix, 5, chemin du Buet, CH-1225 Chêne-Bourg (CH)**

(84) Etats contractants désignés: **AT BE CH DE FR GB IT LI NL SE**

(74) Mandataire: **Dousse, Blasco et al, 7, route de Drize, CH-1227 Carouge/Genève (CH)**

(54) Composition de verre pour la fabrication de fibres résistantes aux alcalis et son utilisation pour renforcer les ciments.

(57) Composition de verre silico-alumino-magnésique à proportion relativement élevée de magnésie pour l'étirage de fibres destinées à renforcer les ciments calciques. Cette composition contient également de l'anhydride phosphorique, ce dernier jouant le rôle de fondant de la composition lors de l'étirage.

ACTORUM AG

## COMPOSITION DE VERRE POUR LA FABRICATION DE FIBRES
## RESISTANTES AUX ALCALIS ET SON UTILISATION
## POUR RENFORCER LES CIMENTS

### Domaine de l'invention

La présente invention a pour objet une composition de verre à base d'oxydes métalliques, notamment de silice, d'alumine et de magnésie, destinée à la fabrication de fibres résistantes aux alcalis. De telles fibres sont utilisées comme renfort des ciments, mortiers et bétons riches en silicate de calcium, par exemple les ciments Portland.

### Etat de la technique

On sait que l'utilisation des fibres de verre pour armer les ciments est limitée par la susceptibilité de telles fibres à la décomposition par les alcalis desdits ciments dont le pH peut être relativement élevé (de l'ordre de 12 à 13,5 environ). On a, dès lors, proposé de nombreuses compositions de verre permettant de fabriquer des fibres et filaments de résistance aux alcalis améliorée. Les principes sur lesquels ces compositions sont basées ont trait à l'introduction, dans le verre, d'oxydes qui forment difficilement des hydroxydes en milieu alcalin aqueux (réactions endothermiques), ou dont les hydroxydes (lorsque ceux-ci se forment) sont très peu solubles dans le milieu considéré. Des oxydes dont il est généralement admis qu'ils remplissent ces conditions sont, par exemple, les oxydes de zirconium, calcium, titane, étain, magnésium, fer, manganèse, etc... On trouvera des détails sur de telles compositions de verre dans les références suivantes : J. Amer. Ceramic Soc. 62, 447 (1979); Am. Ceram. Soc. Bull. 1975, 54 (3), 272-6; J. Mater. Sci. 13 (1978), 97-107; Brevets GB 1,460,042, USP 2,334,691; 2,571,074; 4,090,882; Brevets allemands 23 15 851; 23 65 392; 27 50 560. En particulier, la zircone serait efficace pour rendre les fibres de verre résistantes aux alcalis (voir brevet FR 2.184.779); elle a cependant l'inconvénient d'être très chère, les verres qui la contiennent ont une température de fusion relativement élevée et, par ailleurs, elle ne semble pas aussi efficace que prévu comme on le verra plus loin.

Dans le brevet allemand No 21 29 016, on décrit une composition de verre silico-aluminée contenant du MgO et du ZnO, la teneur en oxyde de magnésium étant relativement faible par rapport à celle en oxyde de zinc. De telles fibres présentaient une résistance améliorée à l'attaque par les alcalis et leur résistance à la rupture après quatre semaines en présence de ciment était de 500 N/mm$^2$

Or, il est désirable d'augmenter, dans une telle composition de fibre de verre, la teneur en magnésie car la présence de cette dernière, quoiqu'elle se transforme relativement facilement en hydroxyde en présence de ciment frais, donne lieu à la formation d'une pellicule protectrice insoluble à la surface de la fibre (brucite), cette pellicule s'opposant à la pénétration, dans la fibre, des agents d'attaque de celle-ci. Cependant, en général, une composition à base de $SiO_2$ et d'$Al_2O_3$ riche en MgO n'est fusible qu'à une température relativement élevée ce qui, pour des raisons économiques évidentes, n'est pas avantageux en ce qui concerne l'étirage des fibres à partir d'une telle composition (usure prématurée des creusets de fusion et des filières d'étirage). De plus, l'intervalle de température correspondant à la plage des viscosités convenable pour l'étirage est extrêmement étroit, ce qui rend très difficile le maintien des conditions propices à cette opération. Cependant, on peut remédier à ces inconvénients par adjonction à la composition d'une faible quantité de $P_2O_5$ qui agit comme fondant en ramenant la température d'étirage du mélange à un domaine de l'ordre de 1250 à 1400°C et en élargissant considérablement l'intervalle des températures auxquelles le mélange fondu présente une viscosité convenant à l'étirage des fibres de verre.

Il faut noter qu'il existe déjà des compositions contenant, entre autres, de la silice, de l'alumine, de la magnésie et de l'anhydride phosphorique. Ainsi, la publication de brevet japonais (Kokai) No 74/ 76.913 (voir Chemical Abstracts 81, 175.133 $\sqrt{}$) décrit une composition de verre contenant 30-70% de $SiO_2$, 17-39% d'$Al_2O_3$, 4-20% de MgO et 3-15% de $P_2O_5$. Ce verre possède une grande résistance mécanique mais sa teneur en MgO est encore insuffisante pour procurer une résistance notable à l'attaque des alcalis.

Le brevet FR No 2.447.891 divulgue des fibres de verre résistantes aux milieux basiques pour le renforcement des ciments obtenues à partir de compositions de verre contenant de la silice, de l'alumine, de la magnésie en proportion nettement plus élevée que dans la référence précédente (20-40%), de la zircone et, facultativement, d'autres oxydes dont, par exemple, le pentoxyde de phosphore. Cependant, un tel verre contient alors trop d'alumine pour qu'il puisse être étiré en continu avec une filière dans de bonnes conditions et, par ailleurs, on préfère éviter la zircone pour les raisons déjà évoquées plus haut. C'est également le cas des compositions décrites dans le brevet FR No 2.164.861.

Suivant le brevet russe No 381,621, on peut augmenter la résistance aux acides et alcalis d'un verre à base de $SiO_2$, $TiO_2$, $Al_2O_3$, $Fe_2O_3$ et FeO, CaO, MgO et MnO en y incorporant des oxydes de zinc et de strontium ainsi que du $P_2O_5$. Il s'agit là cependant d'une solution très compliquée et peu efficace.

On peut encore citer les documents suivants: le brevet FR 2.332.243 décrit des fibres de verre constituées d'une matrice de verre fibreuse renfermant une ou plusieurs phases cristallines dont les cristallites sont inférieurs à 0,5 $\mu$. Ces fibres ont un module d'élasticité plus élevé que les fibres de composition correspondante ne contenant pas de cristallites et, en conséquence, elles peuvent convenir pour renforcer les synthétiques et les matières minérales comme le ciment, quoiqu'il ne soit pas indiqué qu'elles aient une résistance particulière aux alcalis. On les fabrique en incorporant à des compositions de verre usuelles (parmi lesquelles figurent le système MgO - $Al_2O_3$ - $SiO_2$) des additifs de nucléation tels que $TiO_2$, $ZrO_2$, $SnO_2$, $WO_3$, $P_2O_5$, $V_2O_5$, $Fe_2O_3$, $Cr_2O_3$, etc..., et en soumettant la composition ainsi obtenue à une fusion contrôlée et à un traitement thermique long et compliqué qui n'est pas économique.

Finalement, dans le British Ceramic Abstract, <u>63</u>, No 6, juin 1964, p.199 A, on trouve mentionné un brevet japonais No 20 611/63 concernant une fibre de céramique obtenue par traitement thermique d'une fibre de verre, celle-ci étant constituée par une composition à base de $SiO_2$, $LiO_2$ et $P_2O_5$ et pouvant contenir, en plus, $Al_2O_3$,

$K_2O$, $Na_2O$, $B_2O_3$, MgO, CaO et ZnO. Il n'est pas indiqué dans ce résumé que cette fibre céramique ait une résistance particulière aux alcalis, ni qu'elle puisse être utilisée pour renforcer les ciments.

## Définition de l'invention

Ainsi, la composition de l'invention se caractérise par le fait qu'elle contient, en poids : 40-55 % de $SiO_2$, 13-20 % d'$Al_2O_3$, 20-30 % de MgO et 3-10 % de $P_2O_5$, ce qui permet de fabriquer des fibres de verre résistantes aux alcalis, de bonne solidité et dont la préparation est simple et économique contrairement à la plupart des méthodes antérieures.

Cette composition fournit, par étirage en continu, des fibres de verre dont la résistance aux alcalis du ciment est exceptionnelle, cette résistance étant due à la formation d'une pellicule protectrice à la surface de la fibre. Cette pellicule comprend, d'une part du $Mg(OH)_2$ (brucite) insoluble dans le milieu alcalin du ciment et, d'autre part, de l'apatite ($Ca_5(PO_4)_3OH$) également insoluble et formant barrière à la migration, en direction du coeur de la fibre, des agents de dégradation de celle-ci, notamment les hydroxydes alcalins et alcalino-terreux. La formation de ce composant, l'apatite, dans la pellicule superficielle protégeant la fibre s'explique facilement par la réaction, au contact du ciment, du $P_2O_5$ de la fibre avec la chaux contenue dans le ciment. L'addition d'anhydride phosphorique poursuit donc un double but :

1. faciliter la fusion et l'étirage de la présente composition et

2. participer à la formation de la membrane superficielle protégeant l'intérieur de la fibre contre la dissolution par l'alcali du ciment.

## Brève description des dessins

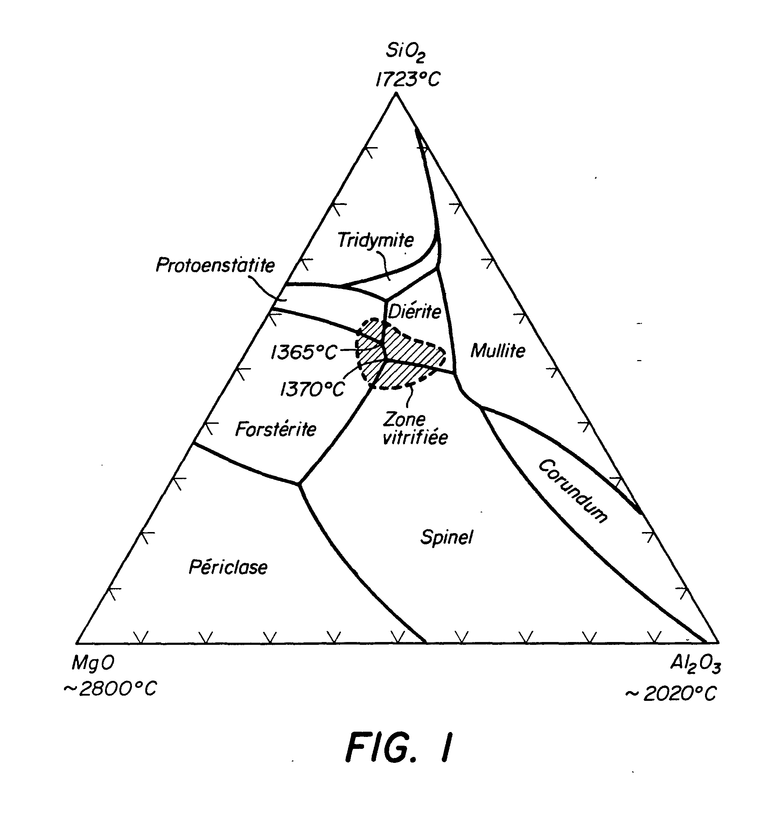

La fig 1 du dessin en annexe est une représentation très simplifiée du diagramme $SiO_2$ - $Al_2O_3$ - MgO tel que publié dans "Phase Diagrams for Ceramists", Amer. Ceram. Society (1964), 246, Fig. 712.

Sur ce dessin on a fait figurer, en pointillés, le domaine de la composition de l'invention. De préférence, celle-ci contiendra, en poids, de 43 à 48 % de $SiO_2$, environ de 15-20 % d'$Al_2O_3$ et de 22 à 25 % de MgO. La teneur en $P_2O_5$ sera avantageusement de 4 à 6 %.

La fig 2 est un diagramme donné en complément à l'Exemple 2 ci-après, illustrant les résistances comparées de la zircone et de la magnésie aux alcalis.

### Modes de réalisation de l'invention

Par ailleurs, la présente composition peut contenir, en addition, d'autres oxydes métalliques, notamment $SnO_2$ et/ou $MnO_2$. Le $SnO_2$, quoique cher, peut encore renforcer la résistance à la corrosion des fibres de verre qui le contiennent et le $MnO_2$ permet d'abaisser encore le point de fusion du mélange pour l'étirage. Les teneurs possibles en $SnO_2$ et $MnO_2$ sont de l'ordre de 2 à 8 % et 2 à 10 %, respectivement, ces chiffres étant d'ailleurs simplement indicatifs. De plus, la présente composition peut contenir, en faibles quantités, d'autres oxydes métalliques provenant, le plus souvent, d'impuretés contaminant les matières de départ utilisées pour la préparation de la composition de l'invention. Comme tels, on peut citer $Fe_2O_3$ et les oxydes alcalins qui peuvent être présent sans inconvénient aux taux de 0 à 2 % et CaO (0 à 6 %).

Pour fabriquer des fibres de verre au moyen de la présente composition, on fond dans un creuset les différents ingrédients qui la composent à une température de l'ordre de 1400 à 1600° et on maintient le tout quelques heures à cette température de manière que se forme un mélange parfaitement homogène. Puis on coule le verre dans un moule et, après refroidissement et durcissement à la température ambiante, on le brise en fragments, ces derniers étant ensuite placés dans le creuset d'un appareil à étirer les fibres de verre. Comme creuset, on peut utiliser un récipient approprié en métal inerte, par exemple Pt-Rh, suivant les techniques habituelles dans l'industrie du verre. Puis, on chauffe pour fondre le verre et on amène la température du mélange à la valeur correcte correspondant à une viscosité appropriée pour l'étirage des fibres; on procède alors à cet étirage au moyen d'un appareil et dans des conditions tout à fait habituelles pour la fabrication des fibres de verre. On trouvera, à ce sujet tous les détails nécessaires, d'ailleurs bien connus de l'homme de métier, dans l'ouvrage suivant : K.L. LOEWENSTEIN : The manufacturing Technology of Continuous Glass Fibers, Elsevier Scientific Publ. Co, New-York 1973.

Les fibres obtenues comme indiquées ci-dessus à partir de la composition de l'invention sont douées de propriétés mécaniques favorables en ce qui concerne le renfort du ciment (résistance à la rupture ($\sigma-$) de l'ordre de 1300 N/mm$^2$) et chimiques, notamment une résistance élevée à l'attaque par les alcalis du ciment, comme on le verra plus loin. On utilise les présentes fibres pour renforcer les ciments, mortiers et bétons en les mélangeant avec ceux-ci à l'état frais en proportion de 1 à 5 % environ. Les ciments ainsi renforcés ont une résistance accrue à la rupture par flexion, cette amélioration pouvant être de l'ordre de 2 à 5 fois par rapport au même ciment non renforcé. Les fibres utilisées ont un diamètre de l'ordre de 10 à 30 $\mu$m et une longueur de quelque cm, par exemple 5 à 15 cm.

## Mise en oeuvre de l'invention

Les exemples qui suivent illustrent l'invention en détail

### Exemple 1

Dans une creuset en Pt-Rh, on a placé 400 g d'un mélange (A) comprenant, en poids, SiO$_2$ 48,1 %; Al$_2$O$_3$ 19,6 %; MgO 26,5 %; P$_2$O$_5$ 5,8 %, ces ingrédients ayant été préalablement moulus en poudres fines. On a chauffé progressivement jusque vers 1540°C et on a maintenu cette température 4 h pour homogénéiser le mélange fondu. Puis on a coulé ce mélange de manière à former des baguettes, celles-ci étant ensuite, après refroidissement, réduites en fragments. On a rempli de ces fragments le creuset d'un appareil d'étirage de fibres de verre, on a chauffé celui-ci jusqu'à fusion et, à 1380°C on a procédé à l'étirage en continu, sous forme de fibres, de la masse en fusion. La vitesse d'étirage était de 10m/sec; les fibres obtenues avaient environ 15-20 $\mu$m d'épaisseur et $\sigma$ = 1360 N/mm$^2$.

On a placé quelques fibres à température ordinaire en contact avec une dispersion aqueuse de ciment Portland (pH 12 à 13,5) et, après 1 semaine, on a examiné la section de la fibre au microscope. On a constaté que la fibre s'était recouverte d'une mince pellicule (env. 1-2 $\mu$m) de matière hétérogène (brucite + apatite) empêchant la solution alcaline d'attaquer plus avant le coeur de la fibre. Compte tenu de la perte d'épaisseur effective consécutive à la formation de ladite pellicule et du vieillissement normal, la résistance spécifique de la fibre n'avait pas été sensiblement affectée par cette attaque alcaline.

Exemple 2

Comme dans l'exemple 1, on a préparé des fibres de verre au moyen des compositions suivantes (% en poids)

| Composition | $SiO_2$ | $Al_2O_3$ | MgO | $P_2O_5$ | $MnO_2$ | $SnO_2$ |
|---|---|---|---|---|---|---|
| B | 48,3 | 19,2 | 23,6 | 5,9 | 2,1 | - |
| C | 45,3 | 18,5 | 24,5 | 5,8 | - | 4,9 |

Les conditions opératoires et les résultats ont été les suivants :

| Composition | Fusion (t°C) | Etirage (t°C) | Vitesse (m/sec) | $\sigma$ ( $N/mm^2$) | $\phi$ ($\mu$m) |
|---|---|---|---|---|---|
| B | 1540 | 1320 | 10 | 1300 | 15-20 |
| C | 1540 | 1320 | 8 | 1280 | 15-20 |

On a ensuite comparé les filaments obtenus des compositions (A) (Exemple 1), (B) et (C), ci-dessus, avec des filaments de contrôle (D) et (E). Les fibres (D) ont été obtenues par étirage d'un verre résistant aux alcalis de composition suivante : CaO 29,2 %; $SiO_2$ 53,0 %; $Al_2O_3$ 7,9 %; $ZrO_2$ 3,7 %; ZnO 5,5 % $TiO_2$ 0,2 %; $Fe_2O_3$ 0,1 %; $Na_2O$ 0,4 %. Une telle compositin figure dans le brevet US 4,090,882. Les fibres (E) ont été achetées dans le commerce; il s'agit de fibres riches en zircone du type "CEMFIL".

On a sélectionné 10 fibres de chacune des compositions (A) à (E) et, à chacune de celles-ci, on a suspendu un poids convenable correspondant au dixième de la charge de rupture initiale. Ces poids étaient de l'ordre de 1 g pour des fibres de l'ordre de 15 $\mu$m. Puis on a disposé ces fibres côte à côte et on les a immergées dans des récipients contenant une dispersion concentrée aqueuse de ciment Portland à 60°C. On a ensuite noté, à intervalles, le taux de rupture des filaments de chaque espèce, le résultat de telles mesures fournissant une estimation comparative de la résistance à l'alcali de ces fibres. Les résultats ont été les suivants, jusqu'à 6 semaines :

| Composition | Proportion de fibres non rompues après : | | | |
| --- | --- | --- | --- | --- |
| | 2 semaines | 4 semaines | 6 semaines | 8 semaines |
| A | 100 % | 80 % | 80 % | 70 % |
| B | 40 % | 40 % | 20 % | 10 % |
| C | 80 % | 60 % | 40 % | pas mesuré |
| D | 60 % | 50 % | 0 % | 0 % |
| E | 100 % | 60 % | 20 % | 0 % |

On voit, par les résultats, ci-dessus que la fibre (A) possède une résistance exceptionnelle à l'alcali du ciment dans les conditions du test accéléré ci-dessus, c'est-à-dire à la température de 60°C.

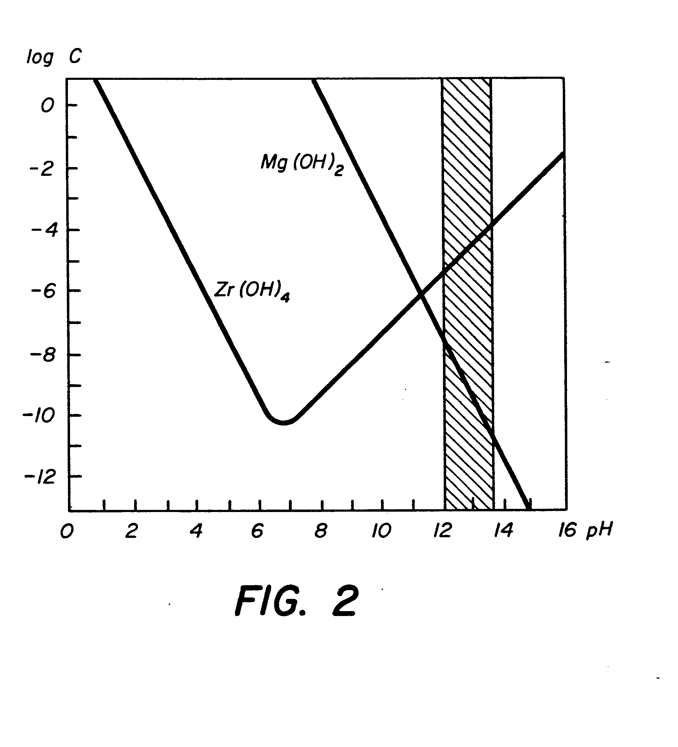

La fig 2 du dessin en annexe illustre la solubilité, en fonction du pH, de la zircone et de l'hydroxyde de magnésium. Cette figure consiste en un graphique tiré de l'"Atlas d'équilibres électrochimiques" par M. Pourbaix, Paris (1963), sur lequel on a porté, en ordonnées, le logarithme de concentration des ions et, en abcisse, le pH. Par ailleurs, figure en ombré la zone de pH (12-13,5) correspondant au ciment Portland, c'est-à-dire le pH auquel sont soumises les fibres utilisées pour renforcer celui-ci. Ce graphique montre que la zircone présente un minimum de solubilité à environ pH 7 et qu'elle est, en fait, nettement plus soluble que $Mg(OH)_2$

dans le domaine de pH du ciment.

### Exemple 3

On a répété l'essai de résistance aux alcalis de fibres obtenues de la composition (A) de l'Exemple 1 et d'une composition assez voisine mais dont la teneur en MgO (inférieure à celle du cadre de l'invention) a été volontairement abaissée à titre comparatif et compensée par des teneurs plus élevées en alumine et silice (composition F). La composition (F) était la suivante (en poids): $SiO_2$ 56 %; $Al_2O_3$ 22,7 %; MgO 15,1 %; $P_2O_5$ 5,6 %; $B_2O_3$ 0,6 %. Il a été admis que la présence de $B_2O_2$, en concentration très faible, ne pouvait être tenue pour responsable de la perte de résistance du verre de cette composition vis à vis des alcalis.

Les résultats des essais conformes à la description donnée à l'Exemple 2 sont les suivants:

| Composition | Proportion de fibres non rompues après (semaines) | | | |
|---|---|---|---|---|
| | 2 | 4 | 6 | 8 |
| A | 100% | 80% | 80% | 80% |
| F | 80% | 60% | 30% | 0% |

Il est donc évident que la proportion de magnésie (supérieure à 20 % dans l'invention) joue un rôle important dans cette composition qui ne contient, comme ingrédients de base, que de la silice, de l'alumine, de la magnésie et de l'anhydride phosphorique.

REVENDICATIONS

1. Composition de verre à base de silice, alumine et magnésie pour la fabrication de fibres résistantes à l'alcali, caractérisée par le fait qu'elle comprend, en poids, 40-55 % de $SiO_2$, 13 à 20 % d'$Al_2O_3$, 20-30 % de MgO et 3-10 % de $P_2O_5$, ce dernier agissant en tant que fondant du mélange d'oxydes constituant la composition.

2. Composition suivant la revendication 1, caractérisée par le fait qu'elle contient, en outre, au moins un des oxydes suivants : $MnO_2$ et $SnO_2$.

3. Composition suivant la revendication 2, caractérisée par le fait qu'elle contient, en poids, 1 à 8 % de $MnO_2$.

4. Composition suivant la revendication 2, caractérisée par le fait qu'elle contient 1 à 10 % de $SnO_2$.

5. Utilisation de fibres de verre obtenues à partir de la composition suivant la revendication 1 pour le renfort de mortiers, ciments ou bétons.

6. Utilisation suivant la revendication 5, caractérisée par le fait qu'on incorpore dans lesdits mortiers, ciments ou bétons frais une quantité de 1 à 10 % en poids desdites fibres de verre.

FIG. 1

FIG. 2